# EUROPÄISCHE PATENTANMELDUNG

(11) **EP 0 791 606 A2**
(43) Veröffentlichungstag der Anmeldung: **27.08.1997**
(21) Anmeldenummer: 96119508.8
(22) Anmeldetag: 05.12.1996
(51) Int. Cl.: C08F 8/30, C08F 8/48

(54) **Verfahren zur Herstellung vom Ozazingruppen enthaltenden Polymeren**

(30) Priorität: 21.02.1996 DE 19606198
(71) Anmelder: BASF Aktiengesellschaft, 67063 Ludwigshafen (DE)
(72) Erfinder: Weber, Martin, Dr., 67433 Neustadt (DE); Mülhaupt, Rolf, Prof. Dr., 79117 Freiburg (DE); Kressler, Jörg, Dr., 79106 Freiburg (DE); Müller, Philipp, 79194 Gundelfingen (DE); Schäfer, Rüdiger, 79194 Gundelfingen (DE)

(57) **Zusammenfassung**

Verfahren zur Herstellung eines Oxazingruppen enthaltenden Polymeren (A) durch Umsetzen eines Nitrilgruppen enthaltenden Polymeren (T) mit einem Monoaminoalkohol bei dem man das Polymere T in der Schmelze mit dem Monoaminoalkohol in Gegenwart oder Abwesenheit eines Katalysators in Abwesenheit eines Lösungsmittels umsetzt.

## Beschreibung

Die vorliegende Erfindung betrifft ein Verfahren zur Herstellung von Oxazingruppen enthaltenden Polymeren (A) durch Umsetzen eines Nitrilgruppen enthaltenden Polymeren (T) mit einem Monoaminoalkohol.

Es war bekannt, daß sich die Nitrilgruppen von Styrol-Acrylnitril-Copolymeren in Gegenwart von Zinksalzen mit Aminoalkoholen zu Oxazingruppen umsetzen lassen (J. App. Pol. Sci., Vol. 56 (1995) 1673-1677 und JP-OS 5 0160 392). Allerdings muß die Umsetzung in Gegenwart eines Lösungsmittels (1,2-Dichlorbenzol oder Dimethylformamid) durchgeführt werden. Ferner wird beschrieben, daß die Umsetzung dann besonders glatt verläuft, wenn der Katalysator in Lösung (n-Butanol) eingesetzt wird. Nachteilig bei der bekannten Methode ist nicht nur, daß sie Lösungsmittel erfordert sondern auch die extrem langen Reaktionszeiten.

Mischungen aus Oxazolingruppen enthaltenden Polymeren und Polymeren mit gegenüber Oxazolingruppen reaktionsfähigen Gruppen waren zwar der US-A 3,509,235 sowie der EP-A 146 965 zu entnehmen, günstige Verfahren zu deren Herstellung jedoch nicht.

Aufgabe der vorliegenden Erfindung war es deshalb, ein neues Verfahren zur Herstellung von Oxazingruppen enthaltenden Polymeren und Formmassen auf der Basis derartiger Polymerer zur Verfügung zu stellen.

Demgemäß wurde ein Verfahren zur Herstellung eines Oxazingruppen enthaltenden Polymeren (A) durch Umsetzen eines Nitrilgruppen enthaltenden Polymeren (T) mit einem Monoaminoalkoholgefunden, wobei man das Polymere T in der Schmelze mit dem Monoaminoalkohol in Gegenwart oder Abwesenheit eines Katalysators in Abwesenheit eines Lösungsmittels umsetzt.

Als Nitrilgruppen enthaltende Polymere T kommen prinzipiell alle Nitrilgruppen enthaltenden Polymere in Betracht, die schmelzbar sind.

Bevorzugte Polymere T enthalten im allgemeinen von 0,5 bis 80, bevorzugt von 0,7 bis 70 Gew.-%, bezogen auf das Gesamtgewicht aller Einheiten, Einheiten (a₁), die sich von Acrylnitril oder Alkylacrylnitril ableiten, worunter Acrylnitril oder C₁- bis C₁₀-Alkylacrylnitril, insbesondere C₁- bis C₃-Alkylacrylnitril bevorzugt sind. Ganz besonders bevorzugt enthalten die Polymeren T Einheiten, die sich von Acrylnitril oder Methacrylnitril ableiten.

Neben den Einheiten a₁ enthalten die bevorzugten Polymeren T von 20 bis 99,5, bevorzugt von 30 bis 99,3 Gew.-%, bezogen auf das Gesamtgewicht aller Einheiten, Einheiten (a₂), die sich von vinylaromatischen Verbindungen, Vinylestern, Acrylsäureestern oder weiteren copolymerisierbaren Monomeren ableiten. Die Polymeren T können auch Mischungen unterschiedlicher Einheiten a₂ enthalten. Zu den bevorzugten vinylaromatischen Verbindungen zählen Styrol, kernalkylierte Styrole oder α-Alkylstyrole wie α-Methylstyrol, insbesondere Styrol. Als bevorzugte Vinylester seien Vinyl-C₂- bis C₁₀-Alkylester, insbesondere Vinylacetat genannt. Beispiele bevorzugter Acrylsäureester sind Acrylsäureester mit 2 bis 10 C-Atomen in der Alkoholkomponente wie Acrylsäureethyl-, -propyl-, -butyl-, -hexyl-, -2-ethylhexylester, bevorzugt Acrylsäurebutylester. Neben diesen Monomeren können auch weitere copolymerisierbare Monomere, die nicht mit Oxazingruppen reagieren, mitverwendet werden. N-Phenylmaleiimid ist ein Beispiel für derartige copolymerisierbare Monomere.

Die Polymeren T können statistische Copolymere oder Blockcopolymere sein. Daneben können die Polymeren T auch Pfropfcopolymerisate, beispielsweise mit einer kautschukelastischen Pfropfgrundlage und einer oder mehreren Pfropfauf lagen sein. Naturkautschuk, Synthesekautschuk oder Polymerisate auf der Basis von konjugierten Dienen, sowie Elastomere auf der Basis von C₁- bis C₁₀-Alkylestern der Acrylsäure oder vernetzte Siloxane können z.B. als Pfropfgrundlage dienen.

Polystyrol-co-Acrylnitril, Terpolymere auf der Basis von Styrol, Acrylnitril und N-Phenylmaleiimid, Pfropfcopolymerisate wie sogenannte Acrylnitril/Butadien/Styrol (ABS), Acrylsäureester/Styrol/Acrylnitril (ASA) oder Acrylnitril/Ethylen/Styrol (AES) -Kautschuke sowie hydrierte oder nicht hydrierte Nitrilkautschuke auf der Basis von Acrylestern, Vinylestern, Dienen und Acrylnitril, wie sie in der DE-A 33 02 124 beschrieben sind, zählen zu den bevorzugten Polymeren T.

Erfindungsgemäß wird das Polymere T mit einem Monoaminoalkohol umgesetzt, wobei bevorzugt Monoaminoalkohole der allgemeinen Formel I in Betracht kommen: 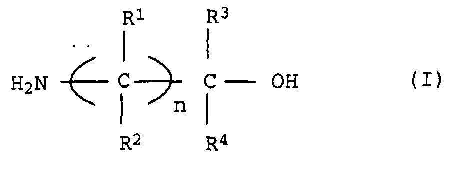 worin die Reste R¹ bis R⁴ unabhängig voneinander ein Wasserstoffatom, C₁- bis C₁₀- Alkyl, C₁- bis C₁₀- Alkylaryl oder C₆- bis C₁₈-Aryl bedeuten können. Die Variable n kann eine ganze Zahl von 1 bis 5, insbesondere 1 oder 2 sein. Die Alkylreste sind entweder linear oder verzweigt. Als Beispiele geeigneter Alkylreste seien Methyl, Ethyl, n-Propyl, i-Propyl, n-Butyl, i-Butyl, und t-Butyl, bevorzugt Methyl genannt. Bevorzugter Alkylarylrest ist Methylphenyl. Als bevorzugter Arylrest ist Phenyl zu nennen. Ganz besonders bevorzugt sind die Reste R¹ bis R⁴ Wasserstoff. 1,2-Aminoethanol wird ganz besonders bevorzugt verwendet. Unter einem Monoaminoalkohol werden erfindungsgemäß auch Mischungen unterschiedlicher Monoaminoalkohole verstanden.

Katalytisch wirksam sind Verbindungen, die mit den umzusetzenden Nitrilgruppen, dem Monoaminoalkohol oder beiden Reaktanden Komplexe bilden. Besonders geeignet als Katalysatoren sind Metall-salze, insbesondere Salze des Zinks oder des Cadmiums. Diese können sowohl Hydratwasser enthalten als auch hydratwasserfrei sein. Besonders bevorzugt sind Zinkchlorid, Zinkacetat, Zinkstearat oder Cadmiumacetat. Darunter sind Zinkacetat-dihydrat oder Cadmiumacetat-dihydrat, insbesondere Zinkacetat-dihydrat besonders bevorzugt. Als Katalysator kommen aber auch Mischungen unterschiedlicher komplexbildender Verbindungen in Betracht.

Nach dem erfindungsgemäßen Verfahren wird das Polymere T zunächst aufgeschmolzen. Hierzu können alle zur Aufbereitung von Polymer-schmelzen geeigneten Aggregate eingesetzt werden. Vorzugsweise wird das Polymere T in einem Kneter oder einem Extruder aufgeschmolzen. Im allgemeinen liegen die Polymeren T bei Temperaturen im Bereich von 150 bis 300°C als Schmelze vor. Zu der Schmelze werden erfindungsgemäß sowohl Katalysator als auch Monoaminoalkohol zugegeben. Im allgemeinen werden von 0,005 bis 0,2 Mol Katalysator pro Mol Nitrilgruppe eingesetzt. Erfindungsgemäß kann die Umsetzung aber auch in Abwesenheit eines Katalysators in der Schmelze stattfinden. Den Monoaminoalkohol verwendet man in der Regel in Mengen von 0,05 bis 10 Mol pro Mol Nitrilgruppe. Die Umsetzung findet in der Regel im genannten Temperaturbereich innerhalb einer Zeit von 0,5 bis 90, bevorzugt von 0,5 bis 60, insbesondere von 0,5 bis 40 Minuten statt.

Das so hergestellte Oxazingruppen enthaltende Polymere A kann nach an sich bekannten Methoden ausgetragen, abgekühlt, gereinigt und beispielsweise zu Granulat verarbeitet oder spritzgegossen werden. Das Polymere A eignet sich zu Herstellen von Formkörpern, Fasern oder Folien, insbesondere jedoch als Blendkomponente in Formmassen.

Um erfindungsgemäß Formmassen herzustellen, kann, wie oben beschrieben, das in einem ersten Schritt hergestellte Polymere A als Granulat eingesetzt und in einem zweiten Schritt mit weiteren Komponenten gemischt werden. Ebenso kann eine Mischung unterschiedlicher Polymerer A verwendet werden. Es hat sich aber als ebenfalls vorteilhaft erwiesen, das Polymere T in einem ersten Schritt wie oben beschrieben zu den Oxazingruppen enthaltenden Polymeren A umzusetzen und ohne weitere Aufarbeitung in einem zweiten Schritt mit den anderen Blendkomponenten zu mischen. Dabei kann das Polymere A in Gegenwart von Katalysatoren, die die Reaktion der Oxazingruppen mit gegenüber Oxazinen reaktionsfähigen Gruppen anderer Blendkomponenten aktivieren, mit den anderen Komponenten gemischt werden. Lewis-Säuren wie Phosphonium- oder Ammoniumsalze sind z.B. hierfür geeignete Katalysatoren.

Die Komponenten der Formmassen können in üblichen Mischvorrichtungen wie Schneckenextrudern, bevorzugt Zweischneckenextrudern, Brabender-Mischern, Banbury-Mischern sowie Knetern gemischt und anschließend extrudiert werden. Nach der Extrusion wird das Extrudat abgekühlt und zerkleinert. Die Reihenfolge der Mischung kann variiert werden, so können zwei oder drei Komponenten vorgemischt werden. Es können aber auch alle Komponenten gemeinsam gemischt werden.

Um eine möglichst homogene Mischung zu erhalten, ist eine intensive Durchmischung vorteilhaft. Dazu sind im allgemeinen mittlere Mischzeiten von 0,2 bis 30 Minuten bei Temperaturen von 160 bis 320°C, bevorzugt von 200 bis 300°C, erforderlich.

Nach dem erfindungsgemäßen Verfahren werden Formmassen auf der Basis von 1 bis 90, bevorzugt von 1 bis 80 Gew.-%, bezogen auf die Summe aller Komponenten, Oxazin enthaltenden Polymeren A und von 10 bis 99, bevorzugt von 20 bis 99 Gew.-%, bezogen auf die Summe aller Komponenten, Polymeren mit gegenüber Oxazingruppen reaktionsfähigen Gruppen (B) hergestellt. Darüberhinaus können die Formmassen von 0 bis 90, bevorzugt von 0 bis 80 Gew.-% Polymere enthalten, die keine gegenüber Oxazingruppen reaktionsfähige Gruppen enthalten (C). Als weitere Komponente können die Formmassen von 0 bis 45, bevorzugt von 0 bis 30 Gew.-%, bezogen auf die Summe aller Komponenten, schlagzähmodifizierender Kautschuke (D) aufweisen. Faser- oder teilchenförmige Füllstoffe oder deren Mischungen können als weitere Komponente (E) in den, nach dem erfindungsgemäßen Verfahren erhältlichen Formmassen, in Mengen von 0 bis 60, bevorzugt von 0 bis 45 Gew.-%, bezogen auf die Summe aller Komponenten, enthalten sein. Die Formmassen können ferner von 0 bis 60, bevorzugt von 0 bis 30 Gew.-%, bezogen auf die Summe aller Komponenten, weiterer Zusätze (F) enthalten.

Als Polymere B kommen insbesondere Polymere, die Carboxyl- oder Aminogruppen enthalten, in Betracht. Sofern Katalysatoren, die die Reaktion von Oxazingruppen mit Mercapto-, Hydroxy-, Epoxi- oder Anhydridgruppen fördern mitverwendet werden, können auch Polymere mit derartigen funktionellen Gruppen als Komponente B eingesetzt werden. Besonders bevorzugt als Komponente B werden Polyester, Polyamide, Polycarbonate sowie mit den genannten Gruppen modifizierte Polyarylenether, Polyolefine oder thermoplastische Elastomere.

Geeignete Polyester sind an sich bekannt und in der Literatur beschrieben. Bevorzugt werden teilaromatische Polyester eingesetzt. Sie enthalten einen aromatischen Ring in der Hauptkette, der von einer aromatischen Dicarbonsäure herrührt. Der aromatische Ring kann auch substituiert sein, z.B. durch Halogen wie Chlor oder Brom oder durch C₁-C₄-Alkylgruppen wie Methyl-, Ethyl-, n-Propyl-, i-Propyl-, n-Butyl-, i-Butyl- oder t-Butylgruppen.

Die Polyester können z.B. durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure oder Isophthalsäure oder deren Mischungen zu nennen. Bis zu 10 mol-% der aromatischen Dicarbonsäuren können durch aliphatische oder cycloaliphatische Dicarbonsäuren wie Adipinsäure, Azelainsäure, Sebacinsäure, Dodecandisäuren oder Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,4-Hexandiol, 1,6-Hexandiol, 1,4-Cyclohexandiol, Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat, Polybutylenterephthalat oder Polybutylennaphthalat bevorzugt.

Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1) bei 25°C).

Bevorzugt sind ganz allgemein Polyamide mit aliphatischem teilkristallinem oder teilaromatischem sowie amorphem Aufbau jeglicher Art oder deren Blends. Entsprechende Produkte sind beispielsweise unter dem Handelsnamen Ultramid® von der BASF AG erhältlich.

Geeignete Polycarbonate sind an sich bekannt. Sie sind z.B. entsprechend den Verfahren der DE-B-1 300 266 durch Grenzflächenpolykondensation oder gemäß dem Verfahren der DE-A-1 495 730 durch Umsetzung von Biphenylcarbonat mit Bisphenolen erhältlich. Bevorzugtes Bisphenol ist 2,2-(Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl, 1,1'-Bis(4,4'-hydroxyphenyl)-2,2',4-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 30 mol-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung von Dichlormethan).

Modifizierte Polyarylenether sind an sich bekannt oder nach an sich bekannten Verfahren erhältlich. So können Polyphenylenether beispielsweise mit Maleinsäureanhydriden in Gegenwart organischer Peroxide als Radikalstarter gepfropft werden. Außerdem ist bekannt Polyphenylenether mit Maleimid, Fumarsäure oder Maleinsäurehalbester zu pfropfen. Aus der DE-A-37 25 112 waren z.B. mit Maleinsäure-mono-2-(meth)acryloxyethylester gepfropfte Polyphenylenether bekannt. Geeignete mit Anhydridgruppen modifizierte Polyarylenethersulfone oder -ketone sind beispielsweise der DE-A-4 110 460 zu entnehmen. Ebenso sind Polyarylenether geeignet, die Anhydridendgruppen enthalten (siehe beispielsweise EP-A 613 916).

Modifizierte Polyolefine sind in der Regel durch radikalische Polymerisation der Olefine mit olefinisch ungesättigten Säuren, Estern oder Anhydriden erhältlich. Beispielhaft seien Polyethylen-co-Acrylsäure, Polyethylen-co-Maleinsäure und Polyethylen-co-... genannt. Weitere geeignete modifizierte Polyolefine sind durch radikalische Pfropfung von Polyolefinen mit olefinisch ungesättigten Säuren, Estern oder Anhydriden zugänglich wie Polypropylen-g-Maleinsäureanhydrid oder Polypropylen-g-Acrylsäure.

Als Komponente C können beispielsweise Polyarylenether, insbesondere Polyarylenethersulfone oder Polyphenylenether, Polystyrole, Polyolefine, insbesondere Polyethylene oder Polypropylene oder Polymethacrylate eingesetzt werden, die jeweils keine gegenüber Oxazinen reaktionsfähige Gruppen enthalten. Im Handel können Polyarylenethersulfone bzw. Polyphenylenether beispielsweise von der BASF Aktiengesellschaft unter den Namen Ultrason® bzw. Luranyl® bezogen werden. Unter den Polymethacrylaten werden Polymethylmethacrylat sowie Copolymere auf der Basis von Methylmethacrylat mit bis zu 40 Gew.-% weiterer copolymerisierbarer Monomerer bevorzugt. Derartige Polymere sind beispielsweise unter den Bezeichnungen Lucryl® von der BASF Aktiengesellschaft oder Plexiglas von Röhm GmbH erhältlich. Zu den als Komponente C geeigneten Polystyrolen zählen auch Acrylnitril enthaltende Polystyrole. Darunter sind die Polymeren T auf der Basis von Styrol und Acrylnitril, wie sie oben beschrieben sind, bevorzugt.

Neben den Komponenten A bis C können die nach dem erfindungsgemäßen Verfahren erhältlichen Formmassen schlagzähmodifizierende Kautschuke E enthalten.

Als Kautschuke, die die Zähigkeit der Blends erhöhen, seien z.B. EP- bzw. EPDM-Kautschuke genannt.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, t-Butyl(meth-)acrylat, Acrylsäure oder Glycidyl(meth-)acrylat. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke sind an sich bekannt oder nach an sich bekannten Methoden erhältlich.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Bevorzugte faserförmige Füll- oder Verstärkungsstoffe, die als Komponente E verwendet werden können, sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch.in Form von Endlossträngen (Rovings) erfolgen. Im fertigen Spritzgußteil liegt die mittlere Länge der Glasfasern vorzugsweise im Bereich von 0,04 bis 0,5 mm.

Kohlenstoff- oder Glasfasern können auch in Form von Geweben, Matten oder Glasseidenrovings eingesetzt werden.

Als teilchenförmige Füllstoffe eignen sich vor allem amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin)

Die Formmassen können ferner als Komponente E Zusatzstoffe enthalten.

Übliche Zusatzstoffe sind beispielsweise Stabilisatoren und Oxidationsverzögerer, Mittel gegen Wärmezersetzung und Zersetzung durch ultraviolettes Licht, Flammschutzmittel, Gleit- und Entformungsmittel, Farbstoffe und Pigmente und Weichmacher.

Pigmente und Farbstoffe sind allgemein in Mengen bis zu 6, bevorzugt 0,5 bis 5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCo₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Als Flammschutzmittel können insbesondere phosphorhaltige Verbindungen in Mengen bis zu 20 Gew.-%, bevorzugt bis zu 10 Gew.-%, eingesetzt werden. Beispiele hierfür sind Phosphorsäureester, Phosphinsäureester, Phosphinoxide, Phosphor oder organische Phosphate. Die phosphorhaltigen Verbindungen können auch in Mischung mit einem Triazinderivat oder Polytetrafluorethylen eingesetzt werden. Bevorzugt werden Triarylphosphinoxide oder Triarylphosphate verwendet.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Die nach dem erfindungsgemäßen Verfahren hergestellten Formmassen eignen sich zur Herstellung von Formkörpern, Folien oder Fasern.

### Beispiele

- VZ:: Viskositätszahl
- DMF:: Dimethylformamid

### Herstellung der Oxazingruppen enthaltenden Polymeren

### Komponente A₁

In einem Reaktionskneter wurden 54 g Polystyrol-co-Acrylnitril (25 Gew.-% Acrylnitril, VZ=82, ml/g, gemessen in 0,5 gew.-%iger Lösung in DMF) bei 200°C aufgeschmolzen. Nach dem vollständigen Aufschmelzen des Polymeren wurden 0,44 g Zinkacetatdihydrat und insgesamt 2,5 ml 1,2-Aminoethanol tropfenweise zugegeben. Nach einer Reaktionszeit von 60 Minuten wurde das Polymere aus dem Kneter ausgetragen. Mittels FT-IR wurde der Anteil der Oxazolin-Einheiten anhand der bei 1664 cm⁻¹ auftretenden Bande zu 0,5 Gew.-% bestimmt.

### Komponente A₂

In einem Reaktionskneter wurden 54 g Polystyrol-co-Acrylnitril (25 Gew.-% Acrylnitril, VZ=82, ml/g, gemessen in 0,5 gew.-%iger Lösung in DMF) bei 200°C aufgeschmolzen. Nach dem vollständigen Aufschmelzen des Polymeren wurden 0,2 g Zinkacetatdihydrat und insgesamt 0,5 ml 1,2-Aminoethanol tropfenweise zugegeben. Nach einer Reaktionszeit von 30 Minuten wurde das Polymere aus dem Kneter ausgetragen. Mittels FT-IR wurde der Anteil der Oxazolin-Einheiten anhand der bei 1664 cm⁻¹ auftretenden Bande zu 0,4 Gew.-% bestimmt.

### Komponente A₃

In einem Reaktionsextruder (ZSK 30, Werner & Pfleiderer) wurden 6 kg Polystyrol-co-Acrylnitril (25 Gew.-% Acrylnitril, VZ=82, ml/g, gemessen in 0,5 gew.-%iger Lösung in DMF) mit 60 g Zinkacetatdihydrat und 200 g 1,2-Aminoethanol bei einer Massetemperatur von 230°C und einer Drehzahl von 250 min⁻¹ umgesetzt. Die Verweilzeit betrug ca. 2 Minuten. Das Produkt wurde granuliert und getrocknet. Mittels FT-IR wurde der Anteil der Oxazolin-Einheiten anhand der bei 1664 cm⁻¹ auftretenden Bande zu 0,4 Gew.-% bestimmt.

### Komponenten A₄ bis A₇

Die Versuche wurden wie unter A₃ beschrieben ausgeführt, jedoch Polystyrol-co-Acrylnitril unterschiedlichen Acrylnitrilgehaltes und unterschiedliche Mengen an Zinkacetatdihydrat verwendet. Die Einsatzstoffe und Ergebnisse sind Tabelle 1 zu entnehmen.

**Tabelle 1**

| PSAN | | | Kat. [g] | Komponente | | |
|---|---|---|---|---|---|---|
| kg | AN-Gehalt [%] | VZ [ml/g] | | Nr. | VZ [ml/g] | Oxazo. [Gew.-%] |
| 6 | 35 | 80 | 60 | A₄ | 76 | 0,5 |
| 6 | 35 | 80 | 90 | A₅ | 75 | 0,75 |
| 6 | 35 | 80 | 105 | A₆ | 80 | 1,3 |
| 6 | 19 | 80 | 60 | A₇ | 75 | 1,4 |
| PSAN: Polystyrol-co-Acrylnitril Kat: Zinkacetatdihydrat Oxazo.: Oxazolin-Einheiten Gehalt | | | | | | |

### Komponente A₈

Der Versuch wurde wie unter A₂ beschrieben durchgeführt, jedoch wurde kein Zinkacetatdihydrat mitverwendet. Der mittels FT-IR anhand der bei 1164 cm⁻¹ auftretenden Bande bestimmte Anteil der Oxazolin-Einheiten im so erhaltenen Polymeren betrug 0,2 Gew.-%.

### Zum Vergleich: Komponente A*

Polystyrol-co-Acrylnitril (25 Gew.-% Acrylnitril, VZ=82 ml/g, gemessen in 0,5 gew.-%iger Lösung in DMF).

### Komponente B₁

Polybutylenterephthalat, z.B. Ultradur® B 4520 der Firma BASF Aktiengesellschaft, charakterisiert durch einen Zug-E-Modul von 2600 N/mm².

### Komponente B₂

Polyphenylenether-g-Fumarsäure mit einem Molekulargewicht (Gewichtsmittelwert) von 61 000 g/mol und 0,4 Gew.-% Fumarsäure (ermittelt durch potentiometrische Tritration).

### Komponente D

Glasfaserroving einer Dicke von 10 µm aus E-Glas, die mit einer Schlichte aus Polyurethan ausgerüstet waren. Nach dem Einarbeiten lagen die mittleren Längen der Glasfaser etwa zwischen 0,1 und 0,5 mm.

### Herstellung und anwendungstechnische Prüfung der Formmassen

Die Komponenten wurden in Form ihrer Granulate bzw. als Roving in einem Mini-Max-Molder bzw. einem Zweiwellenextruder gemischt, aufgeschmolzen und homogenisiert. Die Schmelze der erhaltenen Formmassen wurde durch ein Wasserbad geleitet und granuliert.

Die Homogenität der Formmassen wurde mittels Lichtmikroskopie überprüft und qualitativ bewertet (1: gut; 0: schlecht).

Desweiteren wurden die mechanischen Eigenschaften der mittels Extruder hergestellten Proben bestimmt.

Die Reißfestigkeit und Reißdehnung der Produkte wurde nach ISO 527 an Zugstäben ermittelt. Die Schlagzähigkeit der Produkte wurde an ISO-Stäben nach ISO 179 1eu bestimmt.

Die Zusammensetzungen der Formmassen und die Ergebnisse der Prüfungen sind in den Tabellen 2 und 3 aufgeführt.

**Tabelle 2**

| Unverstärkte Formmassen | | |
|---|---|---|
| Komponente [Gew.-%] | Formmasse Nr. | |
| | 1 | V1* |
| A₁ | 70 | - |
| B₂ | 30 | 30 |
| A* | - | 70 |
| Homogenität | 1 | 0 |

| | | |
|---|---|---|
| * Vergleichsversuch | | |

**Tabelle 3**

| Verstärkte Formmassen | | | | |
|---|---|---|---|---|
| Komponente [Gew.-%] | Formmasse Nr. | | | |
| | 2 | 3 | V2* | V3* |
| A₃ | 10 | 10 | - | - |
| B₁ | 60 | - | 60 | |
| A* | 20 | 80 | 30 | 90 |
| D | 10 | 10 | 10 | 10 |
| Festigkeit [N/mm²] | 95 | 85 | 79 | 74 |
| Reißdehnung [%] | 4,7 | 3,2 | 3 | 1,5 |
| aₙ [kJ/m²] | 53 | 24 | 35 | 13 |

| | | | | |
|---|---|---|---|---|
| * Vergleichsversuch | | | | |

## Patentansprüche

1. Verfahren zur Herstellung eines Oxazingruppen enthaltenden Polymeren (A) durch Umsetzen eines Nitrilgruppen enthaltenden Polymeren (T) mit einem Monoaminoalkohol, dadurch gekennzeichnet, daß man das Polymere T in der Schmelze mit dem Monoaminoalkohol in Gegenwart oder Abwesenheit eines Katalysators in Abwesenheit eines Lösungsmittels umsetzt.

2. Verfahren nach Anspruch 1, dadurch gekennzeichnet, daß man als Polymeres T ein Polymer auf der Basis von Styrol und Acrylnitril einsetzt.

3. Verfahren nach Anspruch 1 oder 2, dadurch gekennzeichnet, daß man als Monoaminoalkohol einen 1,2-Aminoalkohol verwendet.

4. Verfahren nach einem der Ansprüche 1 bis 3, dadurch gekennzeichnet, daß man als Monoaminoalkohol 1,2-Aminoethanol einsetzt.

5. Verfahren nach einem der Ansprüche 1 bis 4, dadurch gekennzeichnet, daß man als Katalysator ein Zink oder Cadmiumsalz verwendet.

6. Verfahren nach einem der Ansprüche 1 bis 5, dadurch gekennzeichnet, daß man von 0,05 bis 10 Mol Monoaminoalkohol pro Mol Nitrilgruppe einsetzt.

7. Verfahren nach einem der Ansprüche 1 bis 6, dadurch gekennzeichnet, daß man von 0,005 bis 0,2 Mol Katalysator pro Mol Nitrilgruppe verwendet.

8. Verfahren zur Herstellung von Formmassen auf der Basis von
A) 1 bis 90 Gew.-% Oxazingruppen enthaltenden Polymeren (A),
B) 10 bis 99 Gew.-% Polymeren mit gegenüber Oxazingruppen reaktionsfähigen Gruppen (B),
C) 0 bis 90 Gew.-% Polymeren, die keine gegenüber Oxazingruppen reaktionsfähigen Gruppen enthalten (C),
D) 0 bis 45 Gew.-% schlagzähmodifizierender Kautschuke,
E) 0 bis 60 Gew.-% faser- oder teilchenförmiger Füllstoffe oder deren Mischungen und
G) 0 bis 60 Gew.-% weiterer Zusätze,
dadurch gekennzeichnet daß man in einem ersten Schritt Nitrilgruppen enthaltende Polymere T in der Schmelze in Gegenwart oder Abwesenheit eines Katalysators mit einem Monoaminoalkohol in Abwesenheit eines Losungsmittels zu den Polymeren A umsetzt und in einem zweiten Schritt die Polymeren A mit den anderen Komponenten mischt.

9. Verwendung der nach dem Verfahren gemäß Anspruch 8 hergestellten Formmassen zur Herstellung von Formkörpern, Folien oder Fasern.
